# EUROPÄISCHE PATENTSCHRIFT

(11) **EP 1 621 316 B1**
(45) Veröffentlichungstag und Bekanntmachung des Hinweises auf die Patenterteilung: **06.09.2006**
(21) Anmeldenummer: 04017638.0
(22) Anmeldetag: 26.07.2004
(51) Int. Cl.: B29C 45/26, B29C 45/33, B29C 45/44

(54) **Spritzgiessform zum Herstellen von Fittings**
Injection mould for manufacturing fittings
Moule à injecter pour la fabrication de raccords à collerette

(43) Veröffentlichungstag der Anmeldung: 01.02.2006
(73) Patentinhaber: IFW MANFRED OTTE GESELLSCHAFT m.b.H. & Co. KG, 4563 Micheldorf (AT)
(72) Erfinder: Schwaiger, Ernst, 4563 Micheldorf (AT); Mitteregger, Erich, 4563 Micheldorf (AT)
(74) Vertreter: Hofinger, Engelbert

(56) Entgegenhaltungen:
- EP-A- 0 630 734
- DE-U- 9 414 523

## Beschreibung

Die Erfindung bezieht sich auf eine Spritzgießform zur Herstellung von Fittings od. dgl. aus thermoplastischem Kunststoff, die an der Innenseite wenigstens eine Ringnut aufweisen, mit einer in einer Trennebene teilbaren Außenform, mit einem entlang einer Formhälfte der Außenform axial verschiebbaren Formkern, an dem ein komplementärer Formwulst für die Ringnut ausgebildet ist, der durch Ringsegmente tragende Hebel gebildet wird, wobei im Formkern ein Betätigungsglied zur Verschwenkung der Hebel axial verschiebbar angeordnet ist, und mit einem die Trennebene der Außenform überbrückenden, mit der zweiten Formhälfte verbundenen Schieber mit unterschiedlich schrägen Führungsnuten, in die in der Trennebene angeordnete, seitliche Vorsprünge sowohl des Formkerns als auch des Betätigungsglieds bewegungsschlüssig eingreifen.

Aus der EP 548 823 A ist es bekannt geworden, das Aus- und Einschieben des Formkernes bewegungsschlüssig mit dem Öffnen und Schließen der Außenform zu koppeln. Hiezu ist ein die Trennebene der Außenform überbrückender Schieber vorgesehen, der zwei seitliche Platten mit Führungsnuten aufweist, in die Vorsprünge des Formkerns eingreifen. '

Um den Öffnungsweg zu verlängern, sieht eine Ausführung vor, dass die Führungsnuten in einem teleskopisch ausfahrbaren Element ausgebildet sind.

Nach der eine Spritzgießform der eingangs genannten Art zeigenden DE 94 14 523 U wird in die bewegungsschlüssige Koppelung zwischen dem Schieber und dem Formkern auch das Betätigungsglied zur vorausgehenden Verschwenkung der Hebel des Formwulstes einbezogen.

Da die größten Kräfte in der Schließstellung zu Beginn des Öffnungsweges in den Formkern einzuleiten sind, sind die Vorsprünge beidseitig in einer Axialebene des zu entformenden Fittings, in der die Trennebene der Außenform liegt, angeordnet, und stellen eine axiale Krafteinleitung aus dem senkrecht dazu sich bewegenden Schieber sicher. Diese Vorsprünge liegen am Ende des Öffnungsweges am Ende der Führungsschlitze, wobei die Erstreckung des Schiebers in seiner Bewegungsrichtung durch das maximale mögliche Ausmaß des Übergriffs über die Trennebene in der Schließstellung der Form beschränkt ist.

Die Erfindung hat es sich nun zur Aufgabe gestellt, in einfacher Weise einen größeren Öffnungsweg des Formkerns zu erzielen. Dies wird erfindungsgemäß dadurch erreicht, dass zwischen dem Schieber und zumindest dem Formkern eine den Öffnungsweg des Formkerns verlängernde Führung mit Abstand zur Trennebene ausgebildet ist. Die zusätzliche Führung wird erst am Ende des üblichen, unveränderten Öffnungsweges wirksam, wobei nicht die Dimension des Schiebers in seiner Bewegungsrichtung vergrößert ist, sondern eine längere Öffnungsbewegung des Schiebers möglich wird, bis auch die mit Abstand zur Trennebene angeordnete Führung ihr funktionelles Ende erreicht hat.

Die zweite Führung umfasst insbesondere ebenfalls seitliche Vorsprünge am Formkern und Führungsnuten, wobei aber auch die vertauschte Anordnung denkbar ist.

In einer bevorzugten Ausführung ist vorgesehen, dass die zweiten, seitlichen Vorsprünge in zweite Führungsnuten eingreifen, die sich parallel zu den ersten Führungsnuten in seitlichen Platten des Schiebers erstrecken. Dies erleichtert die verlängerte Führung, insbesondere wenn auch zweite Vorsprünge am Betätigungsglied vorgesehen sind, da die Anordnung der Vorsprünge und die Aufteilung der Führungsnuten bestmöglich auf die räumlichen Gegebenheiten abgestimmt werden kann. Prinzipiell ist es aber denkbar, dass die ersten und zweiten Vorsprünge in denselben Führungsnuten mit Abstand hintereinander gleiten.

Pro Vorsprung ein Führungsschlitz ist Voraussetzung für eine weitere bevorzugte Ausführung, in der die Breite der mit den ersten Führungsnuten korrespondierenden Anfangsabschnitte der zweiten Führungsnuten größer als der Durchmesser der zweiten Vorsprünge ist. Dadurch wird erreicht, dass die Krafteinleitung in das Betätigungsglied und den Formkern während des längeren, ersten Abschnittes des Öffnungsweges ausschließlich wie bisher zentral über die ersten Vorsprünge erfolgt, da in diesem Abschnitt die zweiten Vorsprünge nicht an den Wänden der zweiten Führungsnuten anliegen. Am Übergang zur Verlängerungsführung verjüngen sich die zweiten Führungsnuten, und die zweiten Vorsprünge übernehmen die weitere Führung zumindest des Formkernes für den Endabschnitt seines Öffnungsweges, während die ersten Vorsprünge aus den ersten Führungsnuten austreten, die sich ab dem Übergang erweitern und vorzugsweise trichterartig enden.

Dem Betätigungsglied für die Verschwenkung der den Formwulst bildenden Hebel sind bevorzugt ebenfalls zweite Vorsprünge und zweite Führungsnuten im Schieber zugeordnet, sodass der Schieber in jeder Platte vier paarweise parallele Führungsnuten aufweist, wobei je ein Vorsprung für die Führungsverlängerung mit Abstand zur Trennebene am Formkern und am Betätigungsglied vorgesehen ist.

Die Verlängerungsführung am Betätigungsglied kann auch entfallen, da die zusätzliche axiale Verschiebung des Betätigungsgliedes nicht erforderlich ist, sobald die Hebel nach innen geschwenkt sind, und die Ringnut im Fitting freigegeben ist. In diesem Fall würde sich der zu Beginn des Öffnungsweges einstellende Abstand zwischen dem Formkern und dem Betätigungsglied während des Verlängerungsweges wieder verkleinern.

Weitere Einzelheiten der Erfindung werden anschließend anhand der Zeichnungen erläutert. Es zeigen:
- Fig. 1: ein Längsschnitt durch eine geschlossene Spritzgießform,
- Fig. 2: eine teilweise geschnittene Ansicht von links in Fig. 1,
- Fig.3: einen Schnitt entsprechend Fig. 1 nach dem Entriegeln der Hebel des Formwulstes,
- Fig. 4: den Schnitt entsprechend Fig. 1 mit einem über einen ersten Abschnitt des öffnungsweges verschobenen Formkern,
- Fig. 5: den Schnitt entsprechend Fig. 1 in der ausgefahrenen Endstellung, und
- Fig. 6: eine Detailansicht der Führungsnuten einer zweiten Ausführung.

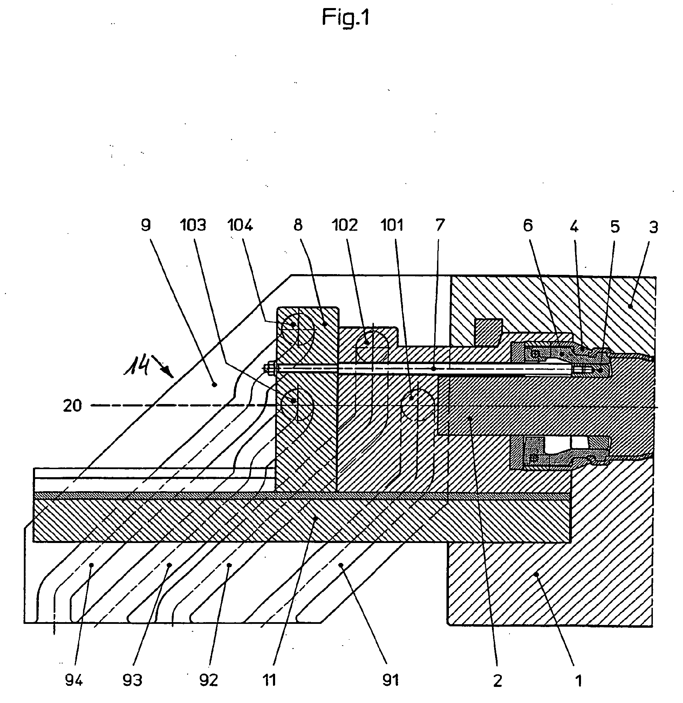

Eine Spritzgießform besteht aus einer oberen Formhälfte 3 und einer unteren Formhälfte 1, wobei die obere Formhälfte 3 von der unteren Formhälfte 1 entlang einer Trennebene 20 geteilt ist und nach oben abgehoben werden kann. Mit der oberen Formhälfte 3 ist ein Schieber 14 verbunden, dessen beiden Seitenplatten 9 in der geschlossenen Form nach Fig. 1 so weit nach unten ragt wie die untere Formhälfte 1. Am Formkern 2 seitlich angebrachte Vorsprünge 101, 103 sind in Führungsnuten 91, 93 der Platten 9 geführt. Der Formkern 2 besteht aus einem inneren Teil und einem diesen hülsenartig umgebenden äußeren Teil, welcher mit einem Formring 4 fest verbunden ist.

Im Kreis angeordnete Hebel 6 bilden im ausgeschwenkten Zustand nach Fig. 1 einen ringförmigen Kernwulst, dessen Segmente von den äußeren Enden der Hebel 6 gebildet sind. Im ausgeschwenkten Zustand der Hebel 6 wird deren Innenseite von einem Verriegelungsring 5 unterstützt. Dieser Verriegelungsring 5 ist durch mindestens eine Zugstange 7 betätigbar, welche die Bewegung eines Betätigungsgliedes 8 mitmacht.

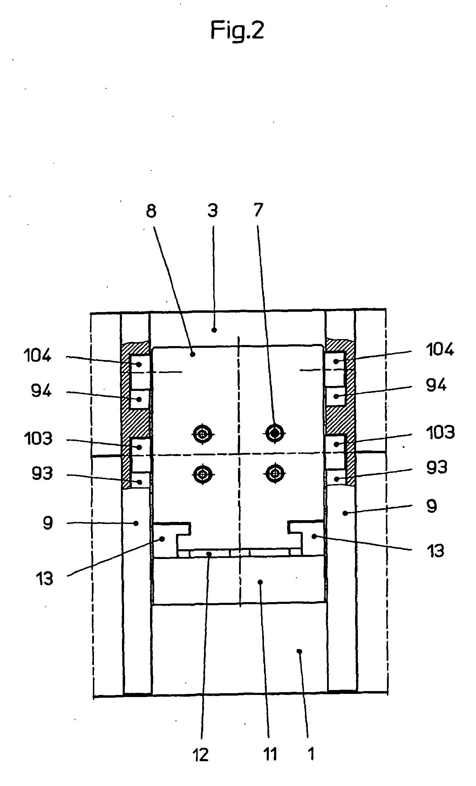

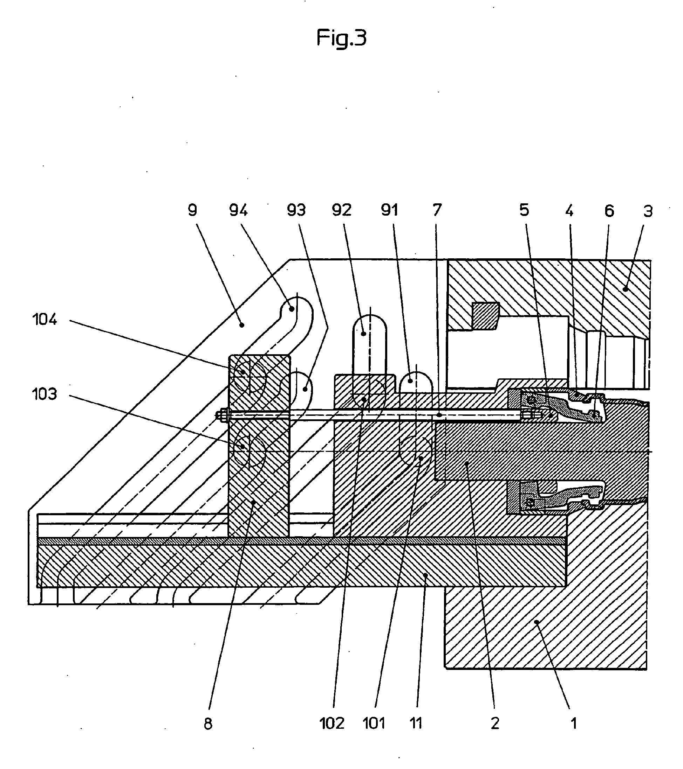

Wird die obere Formhälfte 3 von der unteren Formhälfte 1 abgehoben, so bewegen sich die Führungsnuten 91, 93 in den Platten 9 relativ zu den Vorsprüngen 101, 103. Dadurch kommt es zunächst - wie aus Fig. 3 hervorgeht - zu einer Verschiebung des Betätigungsgliedes 8 auf einer Gleitleiste 12 der unteren Formhälfte 1. Ein Abheben des Betätigungsgliedes 8 wird dabei durch Gleitwinkel 13 (vgl. Fig. 2) verhindert. Durch den Übergang von der Position gemäß Fig. 1 in jene nach Fig. 3 verschiebt sich der Verriegelungsring 5 relativ zu den Hebeln 6. Dadurch werden die Hebel 6 nach innen geklappt, da der Verriegelungsring 5 am rechtwinkelig abstehenden zweiten Arm der Hebel 6 anschlägt. Der Formkern 2 kann dann axial verschoben werden.

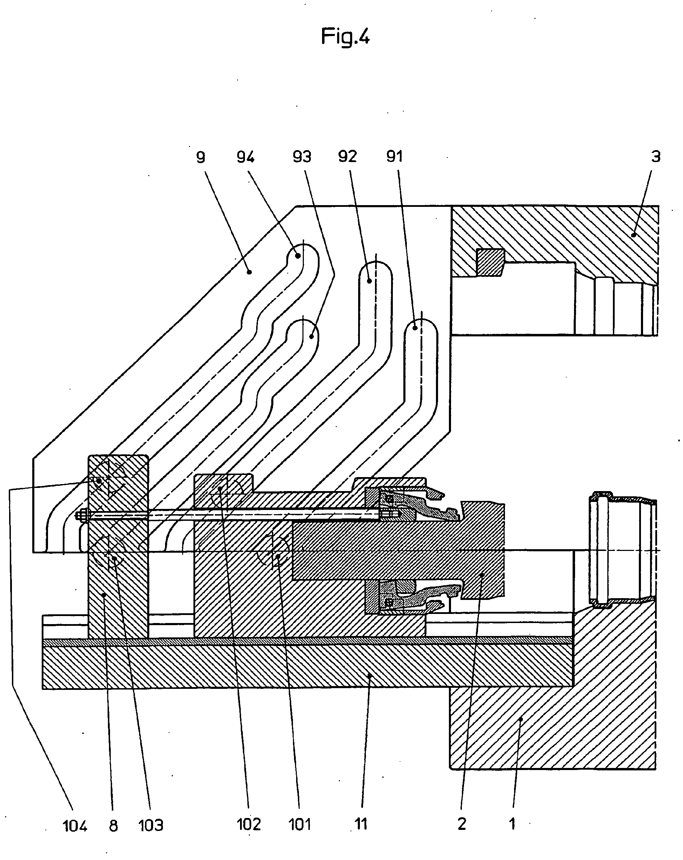

Bewegt sich die obere Formhälfte 3 aus der Position nach Fig. 3 in jene nach Fig. 4, wird auch der Formkern 2 samt dem die Hebel 6 umgebenden Formring 4 verschoben, wodurch der Spritzling 15 gänzlich freikommt. Wie aus Fig. 4 ersichtlich, sind die Vorsprünge 101, 103 in dieser Stellung am unteren Ende des mit der oberen Formhälfte 3 hochgehobenen Schiebers 14 und treten beim weiteren Anheben der oberen Formhälfte 3 aus den Führungsnuten 91, 93 aus, sodass sie keine weitere Verschiebung des Formkerns 2 und des Betätigungsgliedes 8 bewirken können. Die Platte 9 ist daher mit zweiten Führungsnuten 92, 94 versehen, die jeweils einen parallel zu den ersten Führungsnuten 91, 93 verlaufenden Anfangsabschnitt 96, 98 und einen die Führung verlängernden Endabschnitt aufweisen. Da die zweiten Führungsnuten 92, 94 ebenfalls am unteren Rand der Platte 9 enden, liegt ihr Anfang höher als der Anfang der ersten Führungsnuten 91, 93.

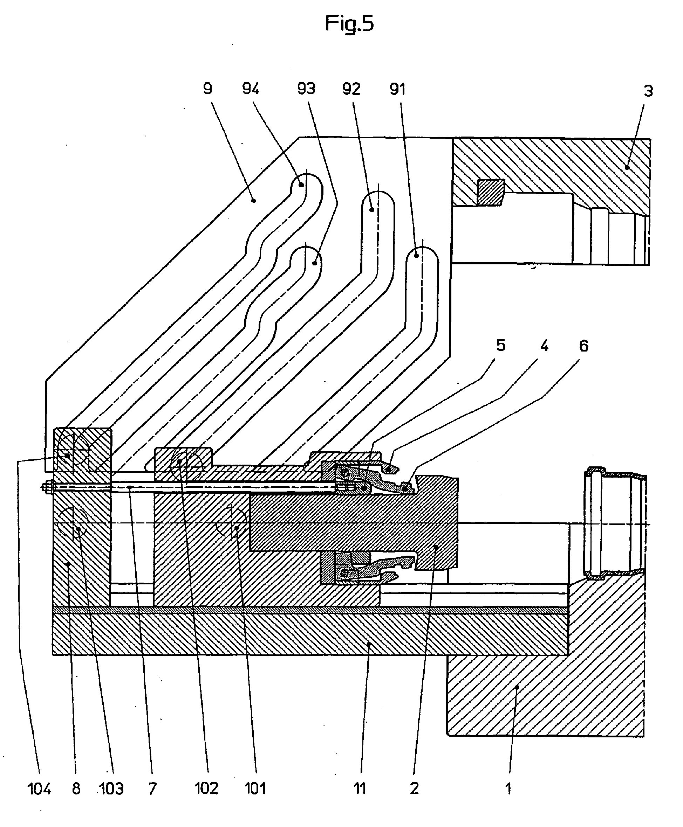

In die zweiten Führungsnuten 92, 94 greifen zweite, seitliche Vorsprünge 102, 104 ein, die mit Abstand zur Trennebene 20 oberhalb der ersten, seitlichen Vorsprünge 101, 103 am Formkern 2 und am Betätigungsglied 8 angeordnet sind. Wie aus Fig. 4 ersichtlich, sind die zweiten Vorsprünge 102, 104 am Übergang vom Anfangsabschnitt 96, 98 zum Endabschnitt 97, 99, wenn die ersten Vorsprünge 101, 103 aus den ersten Führungsnuten 91, 93 austreten, und übernehmen die weitere Führung des Formkerns 2 und des Betätigungsgliedes 8 bis zum Ende des verlängerten Öffnungsweges, wie aus Fig. 5 ersichtlich ist.

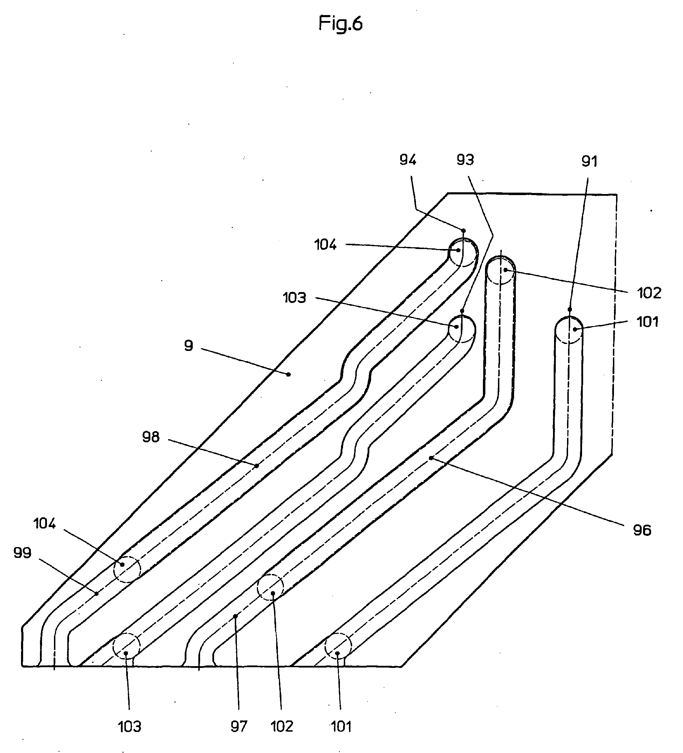

In Fig. 6 ist eine zweite Ausführung einer Platte 9 des Schiebers 14 gezeigt, in der die Breite der Führungsnuten 91, 92, 93, 94 über ihre Länge unterschiedlich ist. Die zweiten Führungsnuten 92, 94 sind über den Anfangsabschnitt 96, 98 breiter als die ersten Führungsnuten 91, 93, die dadurch ohne Beeinflussung mit den ersten Vorsprüngen 101, 103 nahezu über ihre gesamte Länge bis zur trichterartig sich erweiternden Mündung kooperieren, sodass die Öffnungskräfte über die in der Trennebene 20 liegenden ersten Vorsprünge 101, 103 in das Betätigungselement 8 und den Formkern 2 zentral eingeleitet werden. In den folgenden Endabschnitten 97, 99 sind die zweiten Führungsnuten 92, 94 schmäler als in den Anfangsabschnitten 96, 98 und übernehmen die Führung des Formkerns 2 und des Betätigungsgliedes 8 über die Vorsprünge 102, 104.

## Patentansprüche

1. Spritzgießform zur Herstellung von Fittings (15) od. dgl. aus thermoplastischem Kunststoff, die an der Innenseite wenigstens eine Ringnut (16) aufweisen, mit einer in einer Trennebene (20) teilbaren Außenform, mit einem entlang einer Formhälfte (1) der Außenform axial verschiebbaren Formkem (2), an dem ein komplementärer Formwulst für die Ringnut (16) ausgebildet ist, der durch Ringsegmente tragende Hebel (6) gebildet wird, wobei im Formkern (2) ein Betätigungsglied (8) zur Verschwenkung der Hebel (6) axial verschiebbar angeordnet ist, und mit einem die Trennebene (20) der Außenform überbrückenden, mit der zweiten Formhälfte (3) verbundenen Schieber (14) mit unterschiedlich schrägen Führungsnuten (91, 93), in die in der Trennebene (20) angeordnete, seitliche Vorsprünge (101, 103) sowohl des Formkerns (2) als auch des Betätigungsglieds (8) bewegungsschlüssig eingreifen, **dadurch gekennzeichnet, dass** zwischen dem Schieber (14) und zumindest dem Formkern (2) eine den Öffnungsweg des Formkerns (2) verlängernde Führung mit Abstand zur Trennebene (20) ausgebildet ist.

2. Spritzgießform nach Anspruch 1, **dadurch gekennzeichnet, dass** die den Öffnungsweg verlängernde Führung zweite, seitliche Vorsprünge (102, 104) am Formkem (2) und vorzugsweise auch am Betätigungsglied (8) mit Abstand zu den ersten Vorsprüngen (101, 103) aufweist.

3. Spritzgießform nach Anspruch 2, **dadurch gekennzeichnet, dass** die zweiten, seitlichen Vorsprünge (102, 104) in zweite Führungsnuten (92, 94) eingreifen, die sich parallel zu den ersten Führungsnuten (91, 93) in seitlichen Platten (9) des Schiebers (14) erstrecken.

4. Spritzgießform nach Anspruch 3, **dadurch gekennzeichnet, dass** die Breite der mit den ersten Führungsnuten (91, 93) korrespondierenden Anfangsabschnitte (96, 98) der zweiten Führungsnuten (92, 94) größer als der Durchmesser der zweiten Vorsprünge (102, 104) ist.

5. Spritzgießform nach einem der Ansprüche 1 bis 4, **dadurch gekennzeichnet, dass** die ersten Führungsnuten (91, 93) für die in der Trennebene (20) angeordneten ersten Vorsprünge (101, 103) trichterartig enden.

## Claims

1. Injection mould for producing, from thermoplastic plastic, fittings (15) or the like which have at least one annular groove (16) on the inside, said injection mould comprising an outer mould which can be divided in a parting plane (20), and comprising a mould core (2) which is axially displaceable along a mould half (1) of the outer mould and on which there is formed, for the annular groove (16), a complementary mould bead consisting of ring segments carried by levers (6), wherein an actuating element (8) for swivelling the levers (6) is arranged in an axially displaceable manner in the mould core (2) and comprising a slider (14) which bridges the parting plane (20) of the outer mould, is connected to the second mould half (3) and has guide grooves (91, 93) of differing obliqueness, in which there engage motionally lateral projections (101, 103) both of the mould core (2) and of the actuating element (8), said projections being disposed in the parting plane (20), **characterised in that** between the slider (14) and at least the mould core (2) a guide extending the opening stroke of the mould core (2) is formed at a distance from the parting plane (20).

2. Injection mould according to claim 1, **characterised in that** the guide extending the opening stroke has second lateral projections (102, 104) on the mould core (2) and preferably also on the actuating element (8), at a distance from the first projections (101, 103).

3. Injection mould according to claim 2, **characterised in that** the second lateral projections (102, 104) engage in second guide grooves (92, 94), which extend parallel to the first guide grooves (91, 93) in lateral plates (9) of the slider (4).

4. Injection mould according to claim 3, **characterised in that** the width of the initial portions (96, 98) of the second guide grooves (92, 94), the initial portions corresponding with the first guide grooves (91, 93), is greater than the diameter of the second projections (102, 104).

5. Injection mould according to any one of claims 1 to 4, **characterised in that** the first guide grooves (91, 93) for the first projections (101, 103) disposed in the parting plane (20) end in the form of a funnel.

## Revendications

1. Moule d'injection pour la fabrication de raccords (15) ou similaires en matière plastique thermoplastique, qui comprennent au moins une rainure annulaire (16) sur la face interne, comprenant un moule extérieur séparable selon un plan de séparation (20), doté d'un noyau de moule (2) mobile axialement le long d'un demi-moule (1) du moule extérieur, noyau sur lequel est conçu un bourrelet de moule complémentaire pour la rainure annulaire (16), qui est formé par des leviers (6) portant des segments annulaires, un élément d'actionnement (8) destiné à faire pivoter les leviers (6) étant disposé de manière à se déplacer axialement dans le noyau de moule (2), et comprenant un coulisseau (14) surmontant le plan de séparation (20) du moule extérieur, relié au second demi-moule (3), doté de rainures de guidage (91, 93) différemment obliques, dans lesquelles des saillies latérales (101, 103) du noyau de moule (2) et de l'élément d'actionnement (8), disposées dans le plan de séparation (20), se mettent en prise par coopération de déplacement, **caractérisé en ce qu'**un guidage prolongeant le trajet d'ouverture du noyau de moule (2) est conçu à distance du plan de séparation (20) entre le coulisseau (14) et au moins le noyau de moule (2).

2. Moule d'injection selon la revendication 1, **caractérisé en ce que** le guidage prolongeant le trajet d'ouverture comprend des secondes saillies latérales (102, 104) sur le noyau de moule (2) et de préférence également sur l'élément d'actionnement (8) à distance des premières saillies (101, 103).

3. Moule d'injection selon la revendication 2, **caractérisé en ce que** les secondes saillies latérales (102, 104) se mettent en prise dans des secondes rainures de guidage (92, 94), qui s'étendent parallèlement aux premières rainures de guidage (91, 93) dans des plaques latérales (9) du coulisseau (14).

4. Moule d'injection selon la revendication 3, **caractérisé en ce que** la largeur des sections de départ (96, 98) des secondes rainures de guidage (92, 94) correspondant aux premières rainures de guidage (91, 93) est supérieure au diamètre des secondes saillies (102, 104).

5. Moule d'injection selon l'une quelconque des revendications 1 à 4, **caractérisé en ce que** les premières rainures de guidage (91, 93) pour les premières saillies (101, 103) disposées dans le plan de séparation (20) terminent en entonnoir.
